Europäisches Patentamt

(19) European Patent Office

Office européen des brevets

(11) Publication number: 0 278 354
A2

(12) EUROPEAN PATENT APPLICATION

(21) Application number: 88101384.1

(22) Date of filing: 01.02.88

(51) Int. Cl.⁴: F16C 35/06

(30) Priority: 06.02.87 GB 8702698

(43) Date of publication of application:
17.08.88 Bulletin 88/33

(84) Designated Contracting States:
AT BE CH DE ES FR GB GR IT LI LU NL SE

(71) Applicant: BRIDGE BEARINGS LIMITED
Stour Vale Road Lye
Stourbridge West Midlands DY9 8PT(GB)

(72) Inventor: Toye, Edward William
Buckeridge Farm Tenbury Road
Rock Nr. Kidderminster(GB)

(74) Representative: Leach, John Nigel et al
FORRESTER & BOEHMERT
Widenmayerstrasse 4/I
D-8000 München 22(DE)

(54) Bearing assembly.

(57) A bearing assembly for reception in a socket comprising inner and outer race members and a plurality of rolling elements interposed between the inner and outer race members, the outer race member comprising a plastics portion and a metal insert, the metal insert providing a surface which contacts the rolling elements, the metal insert being received in an opening in the plastics portion, the plastics portion having an outer surface part at least partially receivable in the socket and being deformable inwardly to retain the bearing assembly in the socket, the plastics portion comprising at least two parts made separately and then assembled together about the metal insert.

FIG 7

## Bearing Assembly.

This invention relates to a bearing assembly for reception in a socket and to a conveyor roller assembly incorporating a bearing assembly.

In GB 1578349 a conveyor roller assembly is described in which a bearing assembly comprises an outer race member including a plastics portion and a metal insert. The plastics portion is generally annular and the metal insert is received in the opening thereof. The outer race member is received in an end portion of a tubular roller member which end portion is then deformed inwardly. The plastics portion is thus deformed to retain the bearing assembly in position and also to retain the metal insert against withdrawal.

It is an object of the present invention to provide a new and improved bearing assembly and another object of the invention is to provide a new and improved conveyor roller assembly.

According to one aspect of the invention we provide a bearing assembly for reception in a socket comprising inner and outer race members and a plurality of rolling elements interposed between the inner and outer race members, the outer race member comprising a plastics portion and a metal insert, the metal insert providing a surface which contacts the rolling elements, the metal insert being received in an opening in the plastics portion, the plastics portion having an outer surface part at least partially receivable in the socket and being deformable inwardly to retain the bearing assembly in the socket, the plastics portion comprising at least two parts made separately and then assembled together about the metal insert.

According to a second aspect of the invention we provide a bearing assembly for reception in a socket comprising inner and outer race members and a plurality of rolling elements interposed between the inner and outer race members, the outer race member comprising a plastics portion and a metal insert, the metal insert providing a surface which contacts the rolling elements, the metal insert being received in an opening in the plastics portion, the bearing assembly being at least partially receivable within the socket, the plastics portion comprising at least two parts made separately and then assembled together about the metal insert, the plastics portion when thus assembled maintaining the integrity of the bearing by retaining the metal insert relative to the inner race member.

It is not necessary to secure the at least two parts of the plastics portion together because when the plastics portion is assembled about the metal insert and received in the socket the at least two parts will be held together.

The deformation may also restrain the metal insert from movement relative to the plastics portion.

The plastics portion may have at least one radially inwardly extending lip.

The lip may serve to improve the resistance against withdrawl of the metal insert from the plastics portion.

The or each lip may provide a seal to prevent ingress of dirt into and/or egress of lubricant from the bearing assembly.

The or each lip may be received in a respective groove in the inner race member.

Such an inwardly directed lip may be provided at each end of the bearing assembly.

Because the plastics portion is made in two parts there is no restriction upon the extent to which the lip extends inwardly since the metal insert does not have to be forced passed the lip to enable the insert to be received in the plastics portion and neither does, during moulding of the plastics portion, a moulding tool need to be forced out past the lip. Thus, such problems of manufacture and assembly as would arise if the plastics portion were not made in at least two parts are entirely avoided.

A retaining member may be provided which, in use, lies between the inner bearing race and the plastics portion of the outer bearing race to prevent ingress of dirt to and/or egress of lubricant from the bearing assembly.

Such a retaining member may be provided at each axial end of the bearing assembly.

Each part of the plastics portion may include radially inner and outer parts defining between them, at least prior to deformation, an axially extending groove, the radially outer part being movable inwardly upon deformation to close or substantially to close the groove.

The groove prior to deformation may face outwardly of the socket

The outer radial part may have a peripheral lip which extends outwardly of the socket after deformation and overlies the edge of the end portion of the socket.

The two parts of the plastic portion when assembled together may be received in an intermediate part which maintains the two parts of the plastics portion assembled together, which intermediate part is at least partially receivable within the socket.

An axially extending groove may be provided in the intermediate part or between the intermediate part and the plastics portion which groove is closable or when the socket is inwardly deformed.

The rolling elements may be guided by a cage or may be free running and are not guided by a cage.

In the first aspect of the invention the integrity of the bearing may be self maintained by the configuration of the insert and inner race.

Alternatively, the integrity of the bearing may be maintained by retaining the metal insert relative to the inner race member by means of the plastics portion.

In both aspects of the invention the metal insert may comprise two components, one part providing a circumferentially extending race surface for engagement by the rolling elements and the other part providing a radially extending abutment surface to restrain axial movement of the rolling elements.

The one part may have a radially inwardly extending flange to provide a second radially extending abutment surface parallel to and spaced from the first abutment surface and between which the rolling elements are restrained from axial movement.

The parts of the insert may be maintained in assembled relationship by the plastics portion.

The plastics portion may control the spacing between first and second abutment surfaces.

According to a third aspect of the invention we provide a conveyor roller assembly comprising a tubular roller member having a socket at least at one end thereof, a bearing assembly, according to the first aspect of the invention, having the outer part of the plastics portion thereof at least partially received in said socket after assembly of the parts of the plastic portion about the metal insert and said socket comprising a tubular formation which is deformed inwardly to deform the plastics portion of the outer race member and hence to retain the bearing assembly to the socket.

According to a fourth aspect of the invention we provide a conveyor roller assembly comprising a tubular roller member having a socket at least at one end thereof, a bearing assembly according to the second aspect of the invention being received in said socket after assembly of the parts of the plastics portion about the metal insert.

In both the third and fourth aspect of the invention such a bearing assembly may be provided at each end of the roller member.

In the third aspect of the invention the deformation may also restrain the metal insert from movement relative to the plastics portion.

In both the third and fourth aspect of the invention the or each inner race member may be mounted on a spindle assembly which comprises a spindle which extends through the length of the roller member and projects from each end, for engagement with side frames of a conveyor.

Alternatively, a stub spindle may be engaged with the or each inner race member to project from each end of the roller member for engagement with side frames of a conveyor.

According to a fifth aspect of the invention we provide a method of mounting a bearing assembly according to the first aspect of the invention in a socket comprising the steps of taking a plastics portion in at least two parts, assembling the parts of the plastic portion about a metal insert to provide an outer race member, receiving the outer race member in a socket, deforming the socket inwardly to deform the plastics portion and thus maintain the two parts of the plastics portion assembled about the metal insert and to retain the bearing assembly to the socket.

Said deformation may restrain the metal insert from movement relative to the plastics portion.

The rolling elements may be guided by a cage or may be free running, i.e. not guided by a cage.

The invention will now be described with the aid of the accompanying drawings in which:

FIGURE 1 is a radial section through one end of a conveyor roller with a bearing assembly,

FIGURE 2 is an end view of the conveyor roller assembly of Figure 1,

FIGURE 3 is a side section through an alternative bearing for a conveyor roller assembly in accordance with the invention,

FIGURE 4 is a view similar to Figure 3 but of a further embodiment of the invention,

FIGURE 5 is a view similar to Figures 3 and 4 but of a still further embodiment of the invention,

FIGURE 6 is a view similar to Figures 3 to 5 but of a yet still further embodiment of the invention, and

FIGURE 7 is a view similar to that of Figure 1 but showing another embodiment of the invention.

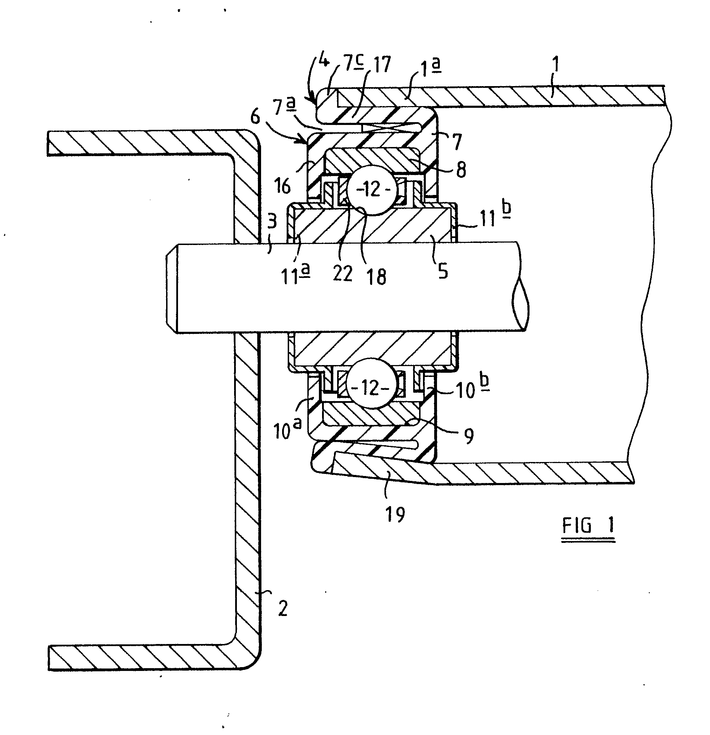

Referring first to Figure 1 of the drawings, there is shown one end of a conveyor roller assembly comprising a tubular roller member 1, with two bearing assemblies 4, one in each end of the roller 1, the roller assembly being mounted between two conveyor side rails 2, on a spindle 3. Each bearing assembly 4 comprises an inner metal race member 5 and an outer race member 6 which comprises an outer plastics portion 7 and an inner hardened metal insert 8.

The insert 8 is of generally annular form and is retained in an opening comprising a central aperture 9, in the plastics portion 7 of the outer race member 6, between a pair of radially inwardly extending flanges or lips 10a and 10b. Between the lips 10a and 10b and the inner metal race member 5, are retaining members 11a and 11b at each axial end of the bearing assembly 4.

A plurality of steel balls 12 are disposed between the inner race member 5 and the outer race member 6, the balls running in grooves 18 cut into the inner and outer race members 5 and 8 which are hardened in order to resist indentation by the balls 12. The balls 12 thus run between the hardened metal surfaces provided on the inner 5 and outer 5 race members respectively.

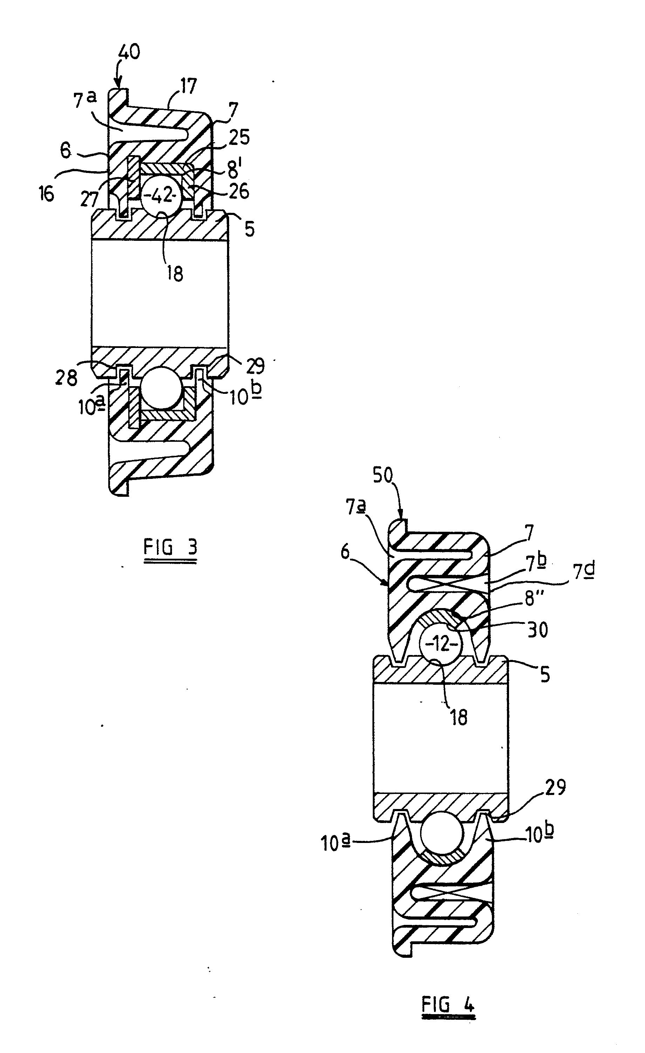

The outer plastics portion 7 of the bearing assembly has a radially inner part 16 and a radially outer part 17, which parts 16 and 17 provide between them an annular groove 7a, which faces outwardly of the roller member 1. The outer radial part 17 is of frusto-conical configuration in its relaxed condition prior to engagement within the roller 1. This is illustrated in Figure 3 in connection with another embodiment but the shape of the outer radial part 17 may be the same as illustrated in Figure 3 in the present embodiment as and in all embodiments described herein. The frusto-conical configuration, when provided, enables the bearing assembly to fit tubes of differing internal diameter.

The outer radial part 17 has a flange 7c which overlies an edge of an end portion 1a of the roller member 1 which comprises a socket, which flange 7c limits the extent to which the outer race 6 can be entered into the end portion 1a of the roller member 1. The retaining members 11a and 11b prevent the egress of lubricant from the bearing and the ingress of dirt to the rolling elements 12.

Each bearing assembly is retained in the end of the roller member 1 by deforming the respective end portion 1a slightly radially inwardly to adopt the configuration shown in the lower part of the drawing. This deforms the outer radially part 17 of the plastics portion 7 inwardly to close the groove 7a which in turn prevents the inner part 16 of the plastics portion 7 from expanding thereby increasing the security of retention of the insert 8 because of the restriction on expansion of the inner part 16 thereby constraining outward passage of the insert 8. In addition removal of the retaining members 11a and 11b is prevented. If desired the groove 7a may not be completely closed but sufficiently closed so that expansion of the inner part 16 is retrained sufficiently to increase the security of retention of the insert 8 and prevent removal of the retaining members.

Furthermore, in this example and as preferred in all the embodiments, the inward deformation of the roller member 1 is such as to cause the plastics inner part 16 to impose a residual compressive load on the metal insert 8, after the deforming load on the rolling member 10 has been removed. As a result, movement of the insert 8 relative to the inner part 16 is restrained in radial, circumferential and axial directions. Hence the insert 8 need not initially be a tight fit with the inner part 16, again facilitating manufacture and assembly, whilst the insert is restrained in use, from movement relative to the inner part 16.

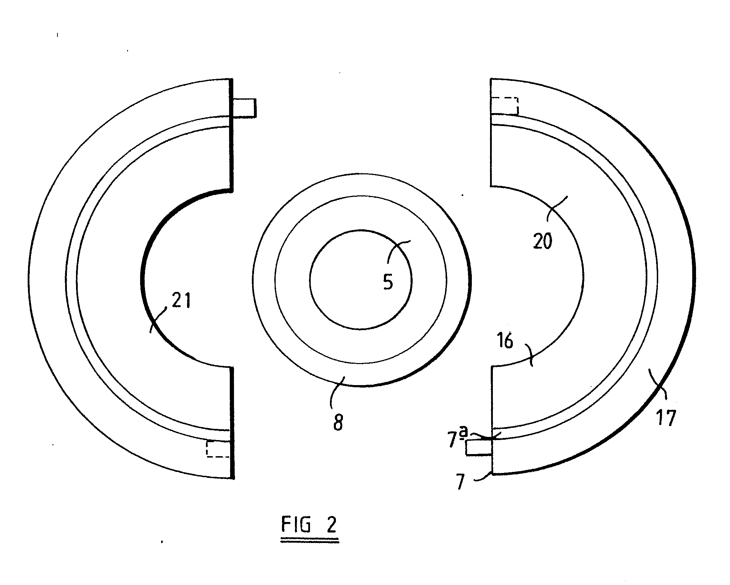

Referring now also to Figure 2, in which the conveyor side limbs 2 and spindle 3 have been omitted, it can be seen that the plastics portion 7 comprises two circumferential separate parts 20 and 21 each of generally semi-circular configuration.

A spigot 20a, 21a is provided on each part 20, 21 which engages in a corresponding recess 20b, 21b.

The two parts 20 and 21 are moulded separately and prior to inserting the bearing assembly in the end of the roller member 1, the two parts 20 and 21 are assembled about the metal insert 8 of the outer race of the bearing, with the inner race member 5 and retaining members 11a,11b, in position.

The metal insert 8 rolling elements 12 (and cage therefore when provided) and the inner bearing race 5 comprise a conventional type rolling element bearing in that these components comprise a discrete unit which is self maintained assembled together.

Thus when the outer bearing race 6 is received in the end portion 1a of the roller member 1 as described above, and the end portion 1a deformed as mentioned, the two parts 20 and 21 will be maintained assembled about the metal insert 8 and inner bearing race 5 in addition to the groove 7a being closed to retain the insert 8 and to prevent withdrawal of the retaining members 11a,11b, from between the plastics portion 7 and inner bearing race 5.

It has been found that such an arrangement considerably facilitates moulding of the plastic portion 7 compared with previous methods which have required the plastic portion to be moulded in one part. The moulding tool does not have to be forced past the inwardly extending lip 10a (or 10b). Further, the metal insert 8 does not need to be forced past lip 10a (or 10b) into the position shown in Figure 1, thus again facilitating assembly of the bearing. Because the plastic portion 7 is made in two parts 20 and 21, the lips 10a (and 10b) can extend inwardly further than previously possible thus providing additional resistance to withdrawal of the metal insert 8 and the lock retaining member 11a,11b, from their respective positions.

Various modifications may be made without departing from the scope of the invention. As shown, the spindle 3 comprises an axle which extends between the side limbs 2 of the conveyor with which the assembly is to be used. If desired, stub spindles may be provided. As shown, the steel balls 12 are received in a cage 22 to again facilitate assembly, although if desired could be free running. Instead of steel balls 12, any other type of rolling element, such as rollers, may be provided. The inner bearing race 5 need not comprise an annular metal collar as shown, but could be of composite metal/plastics construction. The lock retaining members 11a and 1b may be made of plastics or metal as required, but preferably are arranged so that they do not interfere with the relative rotation between the inner and outer bearing races.

Referring now to Figure 3, an alternative bearing assembly 40 is shown, similar parts to the bearing assembly 4 of Figures 1 and 2 being indicated by the same reference numerals.

The bearing assembly 40 comprises an inner metal race member 5 and an outer race member 6 which consists of an outer plastics portion 7 and an inner hardened metal insert 8'.

Unlike the metal insert 8 of the figures 1 and 2 embodiment, the insert 8' is of L shape in cross section rather than having a groove cut in the insert, to retain rolling elements 12.

One limb 25 of the insert extends axially of the bearing assembly 40, and the other limb 26 extends radially to provide a thrust bearing surface for the roller elements.

An auxiliary metal insert 27 is provided which also extends radially so that the roller elements 12 lie between the limb 26 and the auxiliary metal insert 27.

The metal insert 8' and auxiliary metal insert 27 are retained in a central opening 9 having a relatively long part 9a of a first diameter to receive the insert 8' and a relatively short part 9b of a larger diameter to receive the insert 27. The resultant groove 9c thus retains the auxiliary insert 27 from longitudinal movement relative to the plastic insert whilst the shoulder 10b with which the limb 26 is engaged locates the insert 8 against movement away from the insert 27. Thus, the distance between the opposed surfaces of the insert 27 and of the limb 26 of the insert 8' is controlled by the plastics portion 7 and is not dependent on the length of the limb 25 thereby avoiding the need for a sizing operation thereon.

Like the plastic portion 7 of the Figures 1 and 2 embodiment, the plastic portion 7 comprises two separately moulded generally semi-circular parts, each part having a radially inner part 16 and a radially outer part 17 providing between them an annular groove 7 which is closed as an end portion of a tubular member in which the assembly 40 is received is deformed inwardly as described in the first embodiment.

Inwardly extending flanges or lips 10a and 10b of the plastics portion 7 have reduced thickness end parts which are received in grooves 28 and 29 respectively which are provided in the inner metal race member 5. Thus there is no need to provide any lock retaining members such as lock retaining members 11a and 11b shown in Figure 1, to retain grease and prevent the ingress of dirt etc.

It will be appreciated that in this embodiment, the integrity of the bearing is maintained by the plastics portion 7 i.e. the metal insert 8' and the auxiliary metal insert 27' and hence the rolling elements 12 are retained relative to the inner bearing race 5 by the plastics portion 7. The plastics portion 7 is moulded in two halves as is the plastics portion 7 of the Figures 1 and 2 embodiment, and thus the bearing is assembled when the two parts of plastics portion 7 are brought together about the inner metal race member 5.

The bearing assembly is retained in the roller member 1 and the metal insert 8' and auxiliary metal insert 27' are retained within the inner part 16 of the plastics portion 7 and are retrained from movement relative thereto as described in connection with the first embodiment.

Referring now to Figure 4, a further bearing assembly 50 is shown, again similar parts to the bearing assemblies 4 and 40 of Figures 1 to 3 are indicated by the same reference numerals.

In this embodiment, the outer bearing race 6 comprises a single metal insert 8" which is of part toroidal configuration in section, the inner surface 30 of the metal insert 8' being of the same curvature as the roller elements 12. The configuration of the plastics portion 7 differs from those of the previous embodiments in that it is shaped to conform to the part toroidal insert 8". In addition, because the outside diameter of the bearing assembly is relatively greater than that of the embodiments of Figures 1 and 3 a further groove 7b is provided which faces in an opposite direction to the groove 7a and is disposed radially inwardly thereof. This groove is provided with a plurality of radially extending or ribs 7c to prevent the groove being closed as the end portion of the roller member is deformed inwardly and the groove 7b is provided for moulding reasons so that the rosssection of the moulding which comprises the plastics part 7 is substantially constant. Of course, if desired because of moulding constraints a similar further groove may be provided in the embodiments of Figures 1 - 3 or Figure 7.

The bearing assembly is retained in the roller member 1 and the metal insert 8 is retained within the plastics portion 7 and restrained from movement relative thereto as described in connection with the first embodiment. Because of the shape of the insert 8" it would not be possible to assemble the insert in the opening 9 if the plastics portion 7 were not made in at least two circumferentially separate parts. A pair of lips 10a and 10b having reduced thickness end parts are provided as in Figure 3 embodiment, in order to retain grease and prevent the ingress of dirt. Except as otherwise mentioned the bearing assembly is as described in connection with the previous embodiments.

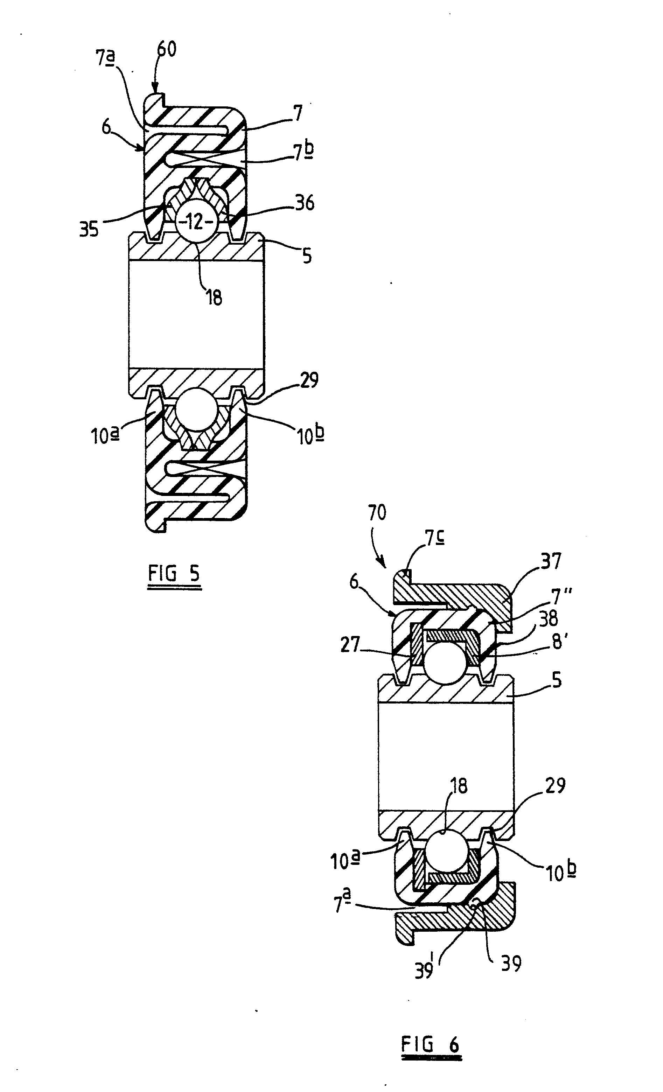

Referring now to Figure 5, a still further embodiment of a bearing assembly 60 is shown.

In this embodiment, the outer race member 6 comprises a pair of metal inserts 35 and 36 each of simple curved configuration and which can be made by a simple pressing operation and which when assembled together, as shown in the drawing, 36, provided an outer race member which receives the rolling elements 12 to maintain the rolling elements 12 in the groove 18 in the inner metal race member 5. In this embodiment, as in the Figure 3 embodiment, the two metal inserts 35 and 36 are retained in the position shown when the two parts of the plastic portion 7 are assembled together.

In all other respects the bearing assembly is similar to that of Figure 4.

Referring now to Figure 6, a yet still further bearing assembly 70 is shown.

In this arrangement, the inner metal race member 5 is again similar to that of the previous embodiments, but the race member 6 comprises an outer plastics portion 7″ and an inner hardened metal insert 8′ and an auxiliary hardened metal insert 27′ as described in connection with Figure 3. The plastics portion 7″ comprises a radially outer part 37 which is received directly in the end of a roller, and is separate from a radially inner part 38 of the outer race member 6 with a groove 7a between them.

As in Figure 3, the metal insert 8′ and the auxiliary metal insert 27′ are provided to provide metal bearing surfaces for the roller members 12 and are located by the inner part 38 in the same way as in Figure 3. The radially inner part 38 of the plastic portion 7″ is made in two separate generally semi circular parts, but the outer radial part 37 may be of a simple annular form to receive the parts 38. The parts 38 have a pair of lips 10a and 10bhaving reduced thickness end parts which are received in grooves 29 of the inner race to retain grease in the bearing and prevent the ingress of dirt as in the previous embodiments.

Radially inner part 38 of the plastics portion 7″ has a circumferential wall 38″ which has a rib 39 extending outwardly, which rib 39 is a snap interfit with a corresponding groove 39′ provided in the radially outer part 37.

The part 37 has an outwardly extending lip 7c which engages the periphery of an opening in a roller member in the same manner as the lip 7c of the plastics portion 7 in figure 1.

Thus when the bearing assembly is received by the roller member 1 and preferably the groove 7a is closed by the end of the roller in which the bearing assembly 70 is received being deformed inwardly so that the bearing assembly and the metal insert 8′ and auxiliary metal insert 27′ will be prevented from being withdrawn from the inner part 38 because of the lips 10a,10b, and the inner part 38 will be prevented from separating from outer part 37 as rib 39 will be urged tightly into the groove 39′ and thus prevented from relative movement.

Preferably, the groove 7a is closed by the end of the roller in which the bearing assembly 70 is received being deformed inwardly as described hereinbefore so that the bearing assembly 70 is retained within the roller member 1 and the metal insert 8 and auxiliary metal insert 27′ are retained within the inner part 38 and restrained from movement relative thereto as described hereinbefore in connection with the previous embodiments.

The inner plastics part 38 is of relatively complicated shape and so requires expensive moulding tools but the outer part 37 is relatively simple and so requires less expensive tools. Hence, a range of parts 37 of different external diameters to fit different sizes of tube but with the same internal diameter to fit a single size of inner part 38 can economically be made. This avoids the need to provide the relatively expensive to make inner parts in a range of sizes.

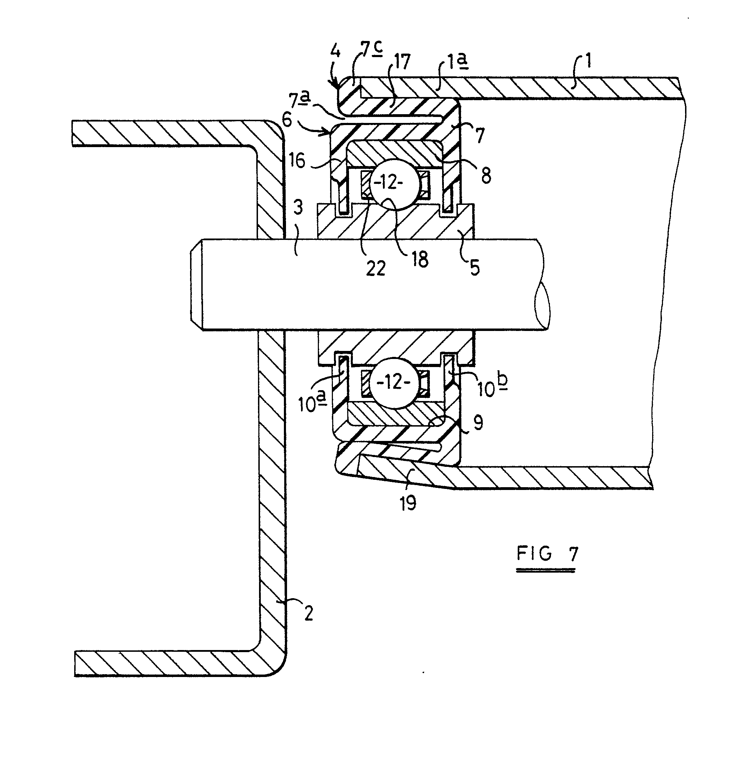

Referring now to Figure 7, there is shown a bearing assembly 80 similar to that of Figure 1 except that the retaining members 11a, 11b are omitted and the plastics portions 7 is provided with radially inwardly extending lips 10a, 10b, similar to the lips 10a, 10b of Figure 3, which have reduced thickness end parts which are received in grooves 28 and 29 respectively which are provided in the inner race member 5 and which serve to retain grease and revent engress of dirty described hereinbefore in connection with Figure 3. If desired, in this and in other embodiments the lips 10a, 10b may be of other configuration to provide an improved seal for example, by providing a plutrality of lips engaged in a plurality of grooves to provide a labyrinth seal.

Variations described in connection with one embodiment may be present mutatis mutandis in any other embodiment.

In all embodiments the plastics portion 7 or 7″ referred to hereinbefore may be made in any desired manner and may be made in two parts as described as hereinbefore or more than two parts.

Although the socket in which the bearing assembly is received is described in the above examples as being an end of a conveyor roller member the socket may be provided by any other suitably configured article.

The features disclosed in the foregoing description, or the accompanying drawings, expressed in their specific forms or in terms of a means for performing the disclosed function, or a method of process for attaining the disclosed result, or a class or group of substances or compositions, as appropriate, may, separately or in any combination of such features, be utilised for realising the invention in diverse forms thereof.

## Claims

1. A bearing assembly for reception in a socket comprising inner and outer race members and a plurality of rolling elements interposed between the inner and outer race members, the outer race member comprising a plastics portion and a metal insert, the metal insert providing a surface which contacts the rolling elements, the metal insert being received in an opening in the plastics portion, the plastics portion having an outer surface part at least partially receivable in the socket and being deformable inwardly to retain the bearing assembly in the socket, the plastics portion comprising at least two parts made separately and then assembled together about the metal insert.

2. A bearing assembly for reception in a socket comprising inner and outer race members and a plurality of rolling elements interposed between the inner and outer race members, the outer race member comprising a plastics portion and a metal insert, the metal insert providing a surface which contacts the rolling elements, the metal insert being received in an opening in the plastics portion, the bearing assembly being at least partially receivable within the socket, the plastics portion comprising at least two parts made separately and then assembled together about the metal insert, the plastics portion when thus assembled maintaining the integrity of the bearing by retaining the metal insert relative to the inner race member.

3. A bearing assembly according to Claim 1 wherein the deformation also restrains the metal insert from movement relative to the plastics portion.

4. A bearing assembly according to any one of the preceding claims wherein the plastics portion has at least one radially inwardly extending lip adapted to provide at least one of

a) improved resistance against withdrawal of the metal insert from the plastics portion,

b) a seal to prevent at least one of, ingress of dirt into and egress of lubricant from, the bearing assembly.

5. A bearing assembly according to Claim 1 or Claim 3 or Claim 4 when dependent upon Claim 1 wherein each part of the plastics portion includes radially inner and outer parts defining between them, at least prior to deformation, an axially extending groove, the radially outer part being movable inwardly upon deformation to close or substantially to close the groove.

6. A bearing assembly according to any one of Claims 1 to 4 wherein the two parts of the plastic portion when assembled together are received in an intermediate part which maintains the two parts of the plastics portion assembled together, which intermediate part is at least partially receivable within the socket.

7. A bearing assembly according to Claim 6 wherein an axially extending groove is provided in at least one of the intermediate part and a region between the intermediate part and the plastics portion, which groove is closable when the socket is inwardly deformed.

8. A bearing assembly according to Claim 1, Claim 3, Claim 5, or any one of Claims 4, 6 and 7, when dependent upon Claim 1 wherein the integrity of the bearing is maintained by retaining the metal insert relative to the inner race member by means of the plastics portion.

9. A bearing assembly according to Claim 2 or any one of Claims 4, 6 and 7 when dependent upon Claim 2, or Claim 8 wherein the metal insert comprises two components, one part providing a circumferentially extending race surface for engagement by the rolling elements, the other part providing a radially extending abutment surface to restrain axial movement of the rolling elements, the one part having a radially inwardly extending flange to provide a second radially extending abutment surface parallel to and spaced from the first abutment surface and between which the rolling elements are restrained from axial movement, and wherein the plastics portion controls the spacing between first and second abutment surfaces.

10. A bearing assembly according to any one end of the preceding claims when mounted in a socket provided at one of a conveyor roller.

FIG 1

FIG 2

0 278 354

FIG 3

FIG 4

FIG 5

FIG 6

FIG 7

0 278 354